(19) Europäisches Patentamt European Patent Office Office européen des brevets

(11) **EP 4 484 038 A1**

(12) **EUROPEAN PATENT APPLICATION**

(43) Date of publication:
**01.01.2025  Bulletin 2025/01**

(21) Application number: **23182645.4**

(22) Date of filing: **30.06.2023**

(51) International Patent Classification (IPC):
**B23C 5/06** (2006.01)

(52) Cooperative Patent Classification (CPC):
**B23C 5/06**; B23C 2210/282; B23C 2220/28;
B23C 2250/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **AB Sandvik Coromant
811 81 Sandviken (SE)**

(72) Inventors:
• **Roman, Stefan
811 81 Sandviken (SE)**
• **Liljerehn, Anders
811 81 SANDVIKEN (SE)**
• **Nygårds, Emma
811 81 Sandviken (SE)**

(74) Representative: **Sandvik
Sandvik Intellectual Property AB
811 81 Sandviken (SE)**

(54) **A MILLING TOOL AND A TOOL BODY FOR A MILLING TOOL**

(57)  A milling tool (101) comprises a tool body (102) and replaceable cutting inserts (109a-h) mounted in associated insert seats (108a-h) arranged in succession one after the other in the front end (103) of the tool body. The insert seats are unevenly distributed in the tool body to provide irregular angular distances between cutting edges (113) of each pair of consecutive cutting inserts. A first insert seat (108a) is configured to keep the cutting edge of a first cutting insert (109a) axially more forwardly than the cutting edges of the other inserts (109b-h) and the angular distance between the first cutting insert and the insert immediately in front of it is smaller than the angular distance between any other pair of consecutive cutting inserts. The invention also relates to a tool body (102) for such a milling tool (101).

Fig 7

*Fig 8*

## Description

TECHNICAL FIELD OF THE INVENTION

The present invention relates to a milling tool according to the preamble of claim 1, as well as a tool body according to the preamble of claim 14.

A milling tool of this type, also referred to as milling cutter, is intended for chip removing machining of metal workpieces by rotating the tool body in a predetermined direction around the central longitudinal axis and simultaneously bringing the active cutting edges of the cutting inserts mounted thereon into contact with the workpiece for shaving off thin chips of material therefrom with each revolution.

The milling tool is typically attached to and driven by a Computer Numerical Control (CNC) machine and may be a milling tool intended for face milling or for square shoulder milling.

BACKGROUND OF THE INVENTION AND PRIOR ART

During a cutting machining operation, there is a dynamic interaction between the machine, the cutting tool mounted therein and the workpiece. Simultaneous movements in different directions, sometimes also by different parts, as well as high cutting forces give rise to vibrations in these parts, which can negatively impact the quality of the machining operation. Vibrations can lead to several issues, including reduced accuracy, deteriorated surface finish, increased tool wear, and even damage to the workpiece or the machine and/or cutting tool itself. Different cutting operations are associated with various degrees of vibration tendencies. This is especially due to the type of material to be processed, the dimensions of the workpiece, especially material thickness, as well as the shape to be cut out in the workpiece.

Two types of vibrations are predominantly found in milling operations. The first type is called forced vibrations. This vibration type can, for an angularly evenly pitched cutting tool, i.e. with equal angular distances between each pair of adjacent cutting inserts mounted in the tool body, be described as periodic with a frequency content dominated by the tooth passing frequency, which is affected by the machine spindle speed and the number of teeth/cutting inserts of the tool. The vibration amplitude is in this case often moderate and considered acceptable. However, if this is not the case the solution to the problem is strictly found in reduction of cutting process parameters and/or increased stiffness of the cutting tool. In light of this it should be emphasized that damped solutions will not contribute to a reduction in amplitude of this type of vibrations.

The second dominating vibration type is called regenerative vibrations or chatter. This vibration type is often devastating to the machining operation and results in poor surface finish and may damage both the cutting tool and the machine. Chatter characterizes itself as a rapid escalation of the vibration amplitude. At an early stage, the amplitude grows exponentially until the cutting tool eventually starts to jump in and out of cut, around which point the vibration amplitude stabilizes.

Commonly used methods for reducing vibrations of this second type by milling operations include reducing cutting forces by decreasing the chipload per cutting insert by reducing the feed or increasing the speed or RPM, or reducing the axial or radial depth of cut. Although these methods reduce vibrations they also imply a slowing down of the milling operation with lowered effectivity as result. Furthermore, reducing the chipload may also be detrimental for the milling tool. Another commonly used method is to try to enhance the rigidity and stability of the milling tool and workpiece to the extent possible, including using a milling tool with a larger diameter and improving the fixtures holding the workpiece, to mention a few examples.

There have also been many tries to create specialized vibration reducing milling tools, with varying results. One solution already known is to use a milling tool with a damped tool body. Although well-functioning, the solution is expensive and is not suitable for all kinds of milling operations.

Other solutions already known involve embedding irregularly arranged components or parts into the milling tool, such as irregular distances between consecutive cutting inserts, cutting inserts of different geometries or at mutually different radial positions, to interfere with the vibration resonance thereby stopping an escalation of the amplitude to a critical level. These solutions often consist of a trade-off between vibration reduction and wear/tool life. That is, the solutions with the best vibration reducing effects have a substantially shorter tool life, and vice versa, as the parts of the milling tool which contribute the most in interfering with the vibration pattern, such as cutting inserts with a different size and/or geometry, are also exposed to large loads and wear.

US 20220055125 A1 discloses one example of such a solution, namely to provide a milling tool with a stepped cutting insert between each pair of consecutive fixed cutting inserts, as seen in a direction of rotation of the milling tool, the stepped cutting inserts furthermore arranged in a zigzag pattern along the circumference of the tool body as seen in said direction, i.e. every other cutting insert as seen in said direction has a different axial position and a different radial position in relation to a fixed cutting insert, to impede vibration escalation and keep cutting forces thereby wear on individual cutting inserts as low as possible.

Another solution of this type is disclosed in EP 3321017 A1, in which it is described a milling tool provided with two different types of cutting inserts with cutting edges or parts thereof located at different axial positions, among other things for reducing vibrations.

There is a constant strive for continuous improvement of products of this type and there is still much to do within the field. Primarily there is a demand for a milling tool by means of which it is possible to more effectively prevent vibration tendencies during a cutting operation without at the same time significantly shortening the service life of the tool.

SUMMARY OF THE INVENTION

The object of the present invention is to provide a milling tool of the type defined in the introduction, which milling tool is being improved in at least some aspect with respect to such milling tools already known, for instance in respect of vibration prevention, surface finish on the workpiece, economic and environmental aspects during production and use of the tool and/or tool life as a result on wear on different parts of the tool during machining.

This object is according to the invention obtained by providing a milling tool comprising

a tool body having a front end and an opposite rear end, the rear end being configured for attachment to a machine, such as a CNC-machine, wherein a central longitudinal axis of the tool body extends between the rear end and the front end of the tool body, at least three replaceable cutting inserts, each cutting insert having at least one cutting edge,

at least three insert seats arranged in succession one after the other in the front end of the tool body and distributed in the circumferential direction of the tool body, each insert seat of the at least three insert seats being configured to accommodate a respective one of said cutting inserts,

wherein each cutting insert is configured to be detachably mounted in a respective one of said insert seats in a fixed position with respect to the tool body as seen in an axial direction thereof, wherein each cutting insert has one of said at least one cutting edges as an active cutting edge when mounted in the tool body, wherein said at least three insert seats are unevenly distributed in the circumferential direction of the tool body so as to provide the milling tool with irregular angular distances between the active cutting edges of each pair of consecutive cutting inserts of the at least three cutting inserts when these are mounted in the tool body,

by which a first of said at least three insert seats is configured to accommodate a first of said at least three cutting inserts to hold it in said fixed position and to keep an axially foremost portion of the active cutting edge of said first cutting insert located so as to define an axially foremost portion of the milling tool and located more forwardly in the longitudinal direction of the tool body, as seen from the rear towards the front end thereof, than the axially foremost portions of the active cutting edges of at least a majority of the other cutting inserts of the at least three cutting inserts when the at least three cutting inserts are mounted in the tool body, and by which

the at least three insert seats are furthermore distributed in the circumferential direction of the tool body in such a way that the angular distance between the active cutting edge of the first cutting insert and the active cutting edge of the insert immediately in front of the first cutting insert as seen in an intended direction of rotation of the tool body, is smaller than the angular distance between the active cutting edges of any other pair of consecutive cutting inserts of the at least three cutting inserts when the at least three cutting inserts are mounted in the tool body.

This configuration of said at least three insert seats and cutting inserts in the milling tool imply the result of an effective dampening of vibrations, by the axially protruding first cutting insert interfering with the resonance of the vibrational movements between the workpiece and milling tool, while the additional cutting forces that would normally be applied to an axially protruding cutting insert are balanced out by the relative positioning between this cutting insert and the angular distribution of cutting inserts along the circumference of the tool body. Simply described, the axially protruding first cutting insert reduces vibrations and its angular positioning in relation to the insert immediately in front of the first cutting insert as seen in an intended direction of rotation of the tool body minimizes extra wear on it at the same time as it decreases, whereby a milling tool with efficient vibration suppression and at the same time a maintained favorable service life is obtained.

According to an embodiment of the invention each of said at least three insert seats comprises an axial support surface configured to co-operate with an abutment surface on a rear side of the associated one of the at least three cutting inserts when mounted in the insert seat, the rear side of the cutting insert defined as the side facing away from the front end of the tool body towards the rear end thereof when the cutting insert is in said mounted position, so as to give the associated one of said cutting inserts axial support and a fixed axial position and define a rear stop in the axial direction of the tool body for the associated one of said cutting inserts and thereby an axial position for the axially foremost portion of the active cutting edge of that cutting insert when this is mounted in the tool body, and said axial support surface of the first insert seat is arranged more forwardly in the longitudinal direction of the tool body, as seen from the rear towards the front end thereof, than the axial support surfaces of at least a majority of the other of said at least three insert seats. This makes it easy for a machine operator when installing and replacing cutting inserts and ensures that the first cutting insert is securely held in the mounted position.

According to another embodiment of the invention the first insert seat is arranged more forwardly in the longitudinal direction of the tool body, as seen from the rear towards the front end thereof, than at least a majority of the other of said at least three insert seats, and thereby configured to hold said first of said at least three cutting inserts in said fixed position with its axially foremost portion of the active cutting edge located so as to define an axially foremost portion of the milling tool and located more forwardly in the longitudinal direction of the tool body, as seen from the rear towards the front end thereof, than the axially foremost portions of the active cutting edges of said at least a majority of the other cutting inserts of the at least three cutting inserts when the at least three cutting inserts are mounted in the tool body. By this structure, a tool body is provided that is simple and cost-effective to manufacture and also easy to use, due to a minimal number of loose parts and the machine operator does not have to make any adjustments of the cutting inserts to get these in the right position. In addition, the axially forwardly arranged first insert seat ensures that the first cutting insert is kept in a stable position during use of the milling tool.

According to another embodiment of the invention for any number of said at least three cutting inserts comprised in the milling tool not more than one of said other cutting inserts of the at least three cutting inserts has its axially foremost portion of the active cutting edge at the same axial position, in the longitudinal direction of the tool body, as the axially foremost portion of the first cutting insert when the at least three cutting inserts are mounted in the tool body. This means that in any case, i.e., by any number of said cutting inserts, no more than two cutting inserts extend further forward axially than the others, which ensures an effective vibration dampening effect of the milling tool.

According to another embodiment of the invention the first insert seat is configured to keep the axially foremost portion of the active cutting edge of said first cutting insert located more forwardly in the longitudinal direction of the tool body, as seen from the rear towards the front end thereof, than the axially foremost portions of the active cutting edges of each of the other cutting inserts of the at least three cutting inserts when the at least three cutting inserts are mounted in the tool body. This means that in any case, i.e., by any number of said cutting inserts, no more than one insert extends further forward axially than the others, which ensures an even more advantageous vibration damping effect of the milling tool.

According to another embodiment of the invention the at least three insert seats and the at least three cutting inserts are arranged such that aside from the first cutting insert all of the cutting inserts of the at least three cutting inserts have the axially foremost portion of the active cutting edge at the same axial position, as seen in the longitudinal direction of the tool body, when the at least three cutting inserts are mounted in the tool body. This results in a milling tool that is cost-effective and easy to produce and use. Simply described, a milling tool that essentially functions like a "regular" milling tool, but with vibration-damping properties, without for that sake greatly impairing the service life of the tool.

According to another embodiment of the invention the first insert seat is configured to keep the axially foremost portion of the active cutting edge of said first cutting insert located at least 0.05 mm, preferably at least 0.06 mm, more preferred at least 0.07 mm, and even more preferred 0.07 mm more forwardly in the longitudinal direction of the tool body, as seen from the rear towards the front end thereof, than the axially foremost portions of the active cutting edges of the other cutting inserts of the at least three cutting inserts when the at least three cutting inserts are mounted in the tool body. It has been shown that these dimensions are favorable for giving the milling tool the desired effect of the invention, i.e., effective vibration dampening properties without greatly reducing the service life of the milling tool.

According to another embodiment of the invention the at least one cutting edge of each of the at least three cutting inserts has a surface wiping part, and that said surface wiping part of each of the at least three cutting inserts each have the same length. According to another embodiment of the invention the at least three cutting inserts are geometrically identical or at least substantially geometrically identical. This makes it easy for the machine operator to mount and replace cutting inserts in the tool body, as well as cost-effective both in terms of production and for customers to purchase inserts for the milling tool.

According to another embodiment of the invention the at least three insert seats are n in number and the at least three cutting inserts are n in number and equal in number to the number of insert seats, and n is an integer from 3 to 12. It has been shown that the effect given by the invention is particularly favorable in milling tools with these numbers of cutting inserts.

According to another embodiment of the invention the n insert seats are distributed in the circumferential direction of the tool body in such a way that the difference between the angular distance between the active cutting edge of the first cutting insert and the active cutting edge of the insert immediately in front of the first cutting insert as seen in an intended direction of rotation (R) of the tool body, and the angular distance between the active cutting edges of a pair of consecutive cutting inserts of the n cutting inserts that has a largest angular distance between its active cutting edges of all pairs of consecutive cutting inserts of the n cutting inserts is at least $\frac{20}{n} + x$ degrees,

wherein x is 0 when $7 \leq n \leq 10$ and x is 0.5 when $5 \leq n \leq 6$ or $11 \leq n \leq 12$ and x is 2 when $3 \leq n \leq 4$,
when the n cutting inserts are mounted in the tool body.

These relations between the largest and smallest said angular distances between the pairs of consecutive cutting inserts in the tool body have proven to be particularly favorable for giving the effect desired by the invention, i.e., a maximum vibration damping effect and a minimal extra wear on the milling tool.

According to another embodiment of the invention the n insert seats are distributed in the circumferential direction of the tool body in such a way that the difference between the angular distance between the active cutting edge of the first cutting insert and the active cutting edge of the insert immediately in front of the first cutting insert as seen in an intended direction of rotation (R) of the tool body, and the angular distance between the active cutting edges of a pair of consecutive cutting inserts of the n cutting inserts that has the second smallest angular distance between its active cutting edges of all pairs of consecutive cutting inserts of the n cutting inserts is at least $\dfrac{5}{n} + y$ degrees,

wherein y is 0.2 when $7 \le n \le 12$ and y is 0.5 when $5 \le n \le 6$ and y is 1 when $3 \le n \le 4$, when the n cutting inserts are mounted in the tool body.

These relations between the smallest and second smallest said angular distances between the pairs of consecutive cutting inserts in the tool body have proven to be particularly favorable for giving the effect desired by the invention, i.e., a maximum vibration damping effect and a minimal extra wear on the milling tool.

According to another embodiment of the invention the n insert seats are distributed in the circumferential direction of the tool body in such a way that the angular distance between the active cutting edges of each pair of consecutive cutting inserts of the n cutting inserts is different than the angular distance between the active cutting edges of any other pair of consecutive cutting edges of the n cutting inserts when the n cutting inserts are mounted in the tool body. This distribution of the insert seats in the tool body further increases the vibration dampening effect of the milling tool.

According to another embodiment of the invention the milling tool is a milling tool intended for square shoulder milling.

According to another embodiment of the invention the milling tool is a milling tool intended for face milling.

The invention also relates to a tool body for a milling tool according to the appended independent claim thereof. Realizations of, and advantages with, such a tool body clearly appears from the above and following description of embodiments of a milling tool according to the invention.

Further advantages and advantageous features of the invention will appear from the following detailed description of embodiments thereof.

BRIEF DESCRIPTION OF THE DRAWINGS

With reference to the appended drawings, below follows a specific description of embodiments of the invention cited as examples.

In the drawings:

Fig. 1 is a perspective view obliquely from below of a milling tool according to a first embodiment of the invention intended for square shoulder milling, with five cutting inserts mounted in the tool body,

Fig. 2 is a partly exploded view of the milling tool of Fig. 1, showing how the cutting inserts are mounted in the associated insert seats in the tool body,

Fig. 3 is a view from below of the milling tool of Fig. 1, showing the front end of the tool body provided with cutting inserts,

Fig. 4 is a side view of the milling tool of Fig. 1 as seen in the direction indicated "IV" in Fig. 3,

Fig. 5 is a perspective view obliquely from below of a milling tool according to a second embodiment of the invention intended for face milling, with eight cutting inserts mounted in the tool body,

Fig. 6 is a partly exploded view of the milling tool of Fig. 5, showing how the cutting inserts are mounted in the associated insert seats in the tool body,

Fig. 7 is a view from below of the milling tool of Fig. 5, showing the front end of the tool body provided with cutting inserts, and

Fig. 8 is a side view of the milling tool of Fig. 5 as seen in the direction indicated "VIII" in Fig. 7.

DETAILED DESCRIPTION OF EMBODIMENTS OF THE INVENTION

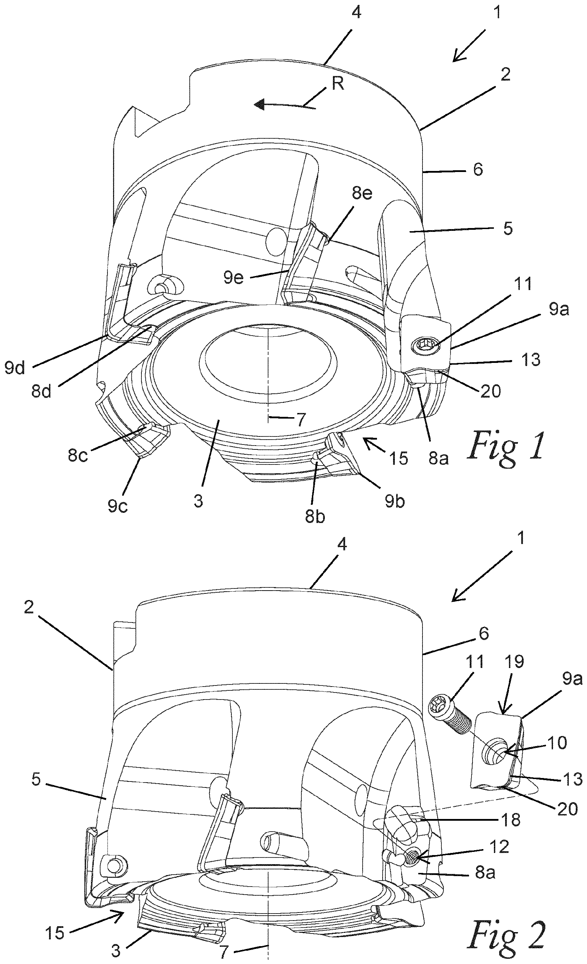

Two different embodiments of a milling tool 1, 101 according to the present invention, each comprising a tool body 2, 102 according to the present invention, are illustrated in Figs 1-8. The milling tool and tool body according to the invention will now be described while at the same time making reference to all these drawings.

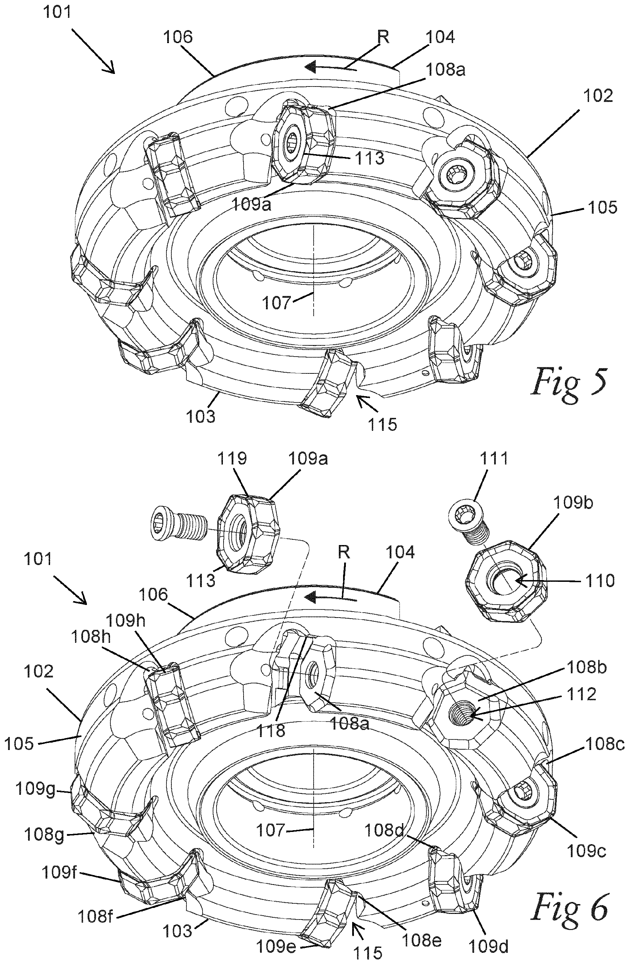

Figs 1-4 show a milling tool 1 according to the present invention intended for square shoulder milling, in other words a square shoulder milling tool or square shoulder milling cutter, whereas Figs 5-8 show a milling tool 101 according to the present invention intended for face milling, in other words a face milling tool or face milling cutter. The effect of the inventive features are however the same or at least substantially the same for both of these types of milling tools, which is why the same or corresponding features need not be described in detail for each of these embodiments, but the components and parts described for one of the milling tools, i.e. one of the two embodiments, and indicated with corresponding reference numerals on the other milling tool - but with a difference of one hundred, have the same or a corresponding function and effect also for the other milling tool, i.e. other embodiment shown, if not otherwise stated.

The milling tool 1 shown in Figs 1-4 comprises a tool body 2 having a front end 3 and an opposite rear end 4 connected by a cylindrical or at least substantially cylindrical envelope surface 5. A rear part of the tool body 2 forms a connection member 6, through which the tool body is mountable, directly or via an intermediate tool holder, to a rotating spindle or the similar of a machine, for instance a CNC milling machine. A central longitudinal axis 7 of the tool body 2 extends between the rear end 4 and the front end 3 of the tool body, which central longitudinal axis coincides with the axis of rotation of the milling tool 1. Hence, an axial direction of the tool body and milling tool is the same as a longitudinal direction thereof.

A front part of the tool body 2 is provided with at least three, in this embodiment five, insert seats 8a-e, arranged in succession one after the other in the front end 3 of the tool body and distributed in the circumferential direction of the tool body 2, each insert seat 8a-e being configured to receive and accommodate a respective replaceable cutting insert 9a-e. Accordingly, each cutting insert 9a-e is configured to be detachably mounted in a respective one of the insert seats 8a-e in a fixed position with respect to the tool body 2 as seen in an axial direction thereof. More specifically, each cutting insert is provided with a central bore 10 through which a mounting screw 11 is brought and thereby fastened in a threaded hole 12 provided in an insert seat 8a-e to mount the cutting insert in the fixed position in the insert seat (see Fig. 2).

A "fixed position as seen in an axial direction" is here to be understood as that a cutting insert 9a-e in the fixed position is not movable or in any way adjustable in the axial direction of the tool body 2, i.e. in the longitudinal direction of the tool body, neither in the direction from the rear end of the tool body towards the front end thereof, nor vice versa, but located at a fixed axial position with respect to the tool body in the longitudinal direction thereof. In other words, the cutting inserts 9a-e are non-adjustably mounted in the insert seats 8a-e of the tool body 2 and the insert seats 8a-e are non-adjustable and fixedly arranged in the tool body 2 in all embodiments of the invention.

The cutting inserts 9a-e are replaceable, which means they are detachably mounted in said fixed position during use of the milling tool 1 in a milling operation and as one cutting edge of the cutting insert is worn out the insert may be released from the fixed position by unscrewing the mounting screw 11 and indexed so as to bring forth a new unused cutting edge, and if no such cutting edge exists, the cutting insert is replaced by a new one.

Each cutting insert 9a-e thus has at least one cutting edge 13 which is the active cutting edge, i.e. the cutting edge positioned so as to be usable for cutting off material from a workpiece by bringing the tool body to rotate and into contact with the workpiece, when the cutting insert is mounted in the fixed position in an associated insert seat 8a-e in the tool body 2. In the first embodiment shown each cutting insert has two identical opposite cutting edges, which means that these inserts may be indexed one time when the first cutting edge is worn out, to arrange the other opposite cutting edge as the active cutting edge, before the entire insert has to be replaced by a new. In any case, when a cutting insert 9a-e is in the mounted axially fixed position one of its cutting edges 13 is positioned as the active cutting edge. The cutting inserts of the milling tool according to the invention may be provided with an arbitrary number of cutting edges.

The cutting inserts 9a-e are geometrically identical or at least substantially geometrically identical. This means that the inserts may have different substrates and/or coatings but have essentially the same dimensions, such as equal length of the surface wiping parts 20 comprised by the cutting edges 13.

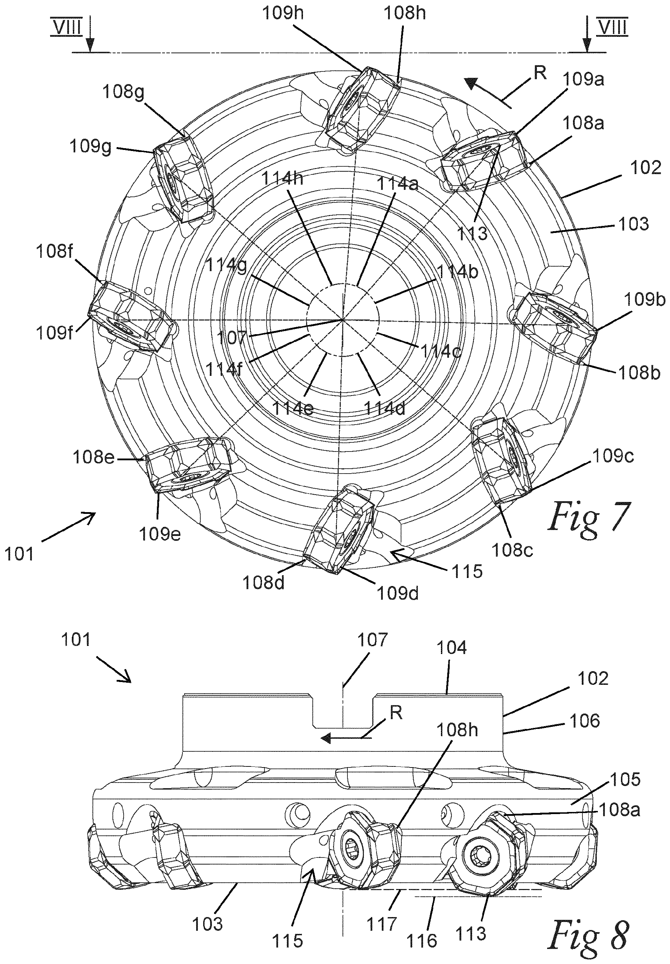

The insert seats 8a-e are unevenly distributed in the circumferential direction of the tool body 2, as seen in the intended direction of rotation R of the tool body, so as to provide the milling tool 1 with irregular angular distances 14a-e between the active cutting edges 13 of each pair of consecutive cutting inserts 9a-e when these are mounted in the tool body 2, i.e. when each of the cutting inserts is mounted in the associated insert seat (see especially Fig. 7).

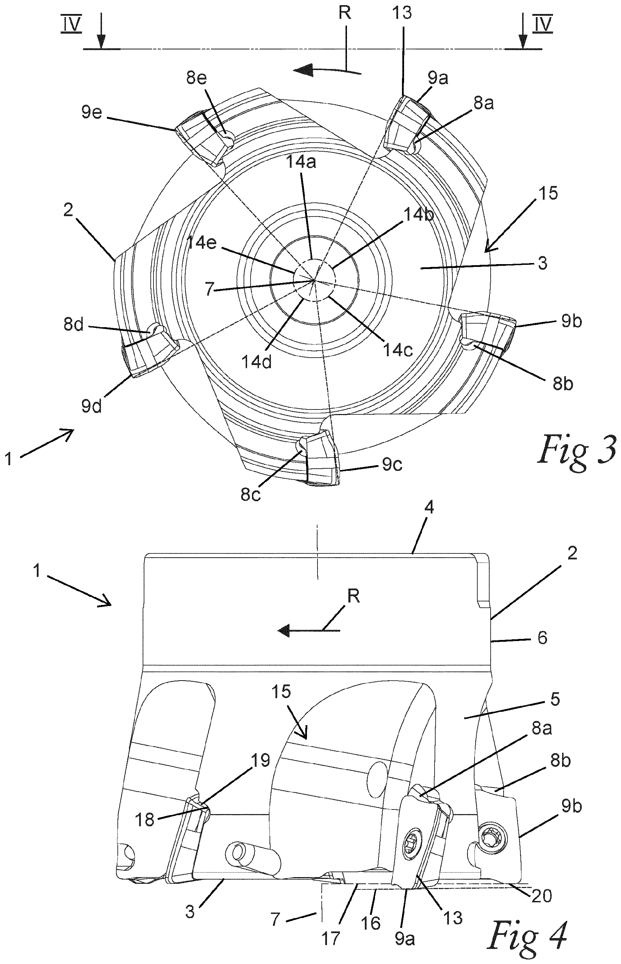

Thus, the insert seats 8a-e are unevenly distributed about the longitudinal axis 7 of the tool body 2 resulting in an unequal spacing between the cutting inserts 9a-e around the tool body and more specifically between the active cutting edges thereof. Milling tools with such a configuration of the insert seats and cutting inserts are called differential-pitched milling tools. This arrangement is accordingly well-known in the art and thus not described in detail in this writing. It could be mentioned however, for explanatory purposes and somewhat simplified, that the angular distance 14a-e between a pair of consecutive cutting inserts 9a-e is measured as the angle between imaginary lines drawn from the center of the tool body 2, i.e. the central longitudinal axis 7, to a point at each respective cutting insert where its primary and secondary parts of the active cutting edge meet, called the Pk-point (as is shown in Figs 3 and 7). Related to this it should be stated that each cutting insert 9a-e is of course included in two different pairs of consecutive cutting inserts, namely forming one pair with the cutting insert immediately in front of it and another pair with the cutting insert immediately behind it as seen in the intended direction of rotation R of the tool body 2.

Each insert seat 8a-e is located at a transition between the front end 3 and the envelope surface 5 or periphery of the tool body 2, wherein each insert seat 8a-e is open towards the front end 3 of the tool body 2 in order to allow a cutting insert 9a-e mounted in the insert seat to project in the axial direction of the tool body 2 beyond the front end 3 thereof and also open towards the envelope surface 5 or periphery of the tool body 2 in order to allow a cutting insert 9a-e mounted in the insert seat to project in the radial direction of the tool body 2 beyond the envelope surface or periphery thereof. A chip pocket 15 is provided in the tool body 2 in front of each insert seat 8a-e as seen in the intended direction of rotation R of the tool body 2. In different embodiments of the invention, each insert seat of the at least three insert seats may be arranged in the front end or preferably in a transition between the front end and the envelope surface.

A first 8a of the insert seats 8a-e is configured to accommodate a first 9a of the cutting inserts 9a-e to hold it in said fixed position and to keep an axially foremost portion of the active cutting edge 13 of the first cutting insert 9a located so as to define an axially foremost portion of the milling tool 1 and located more forwardly in the longitudinal direction of the tool body 2, as seen from the rear 4 towards the front 3 end thereof, than the axially foremost portions of the active cutting edges 13 of at least a majority, in this embodiment all, of the other cutting inserts 9b-e when the cutting inserts 9a-e are mounted in the tool body 2. Accordingly, the first insert seat 8a is configured to keep the associated first cutting insert 9a with its axial foremost portion, in the form of a part of the active cutting edge 13, at a first axial position 16 which is further forward in the longitudinal direction of the tool body 2, i.e. further away from the rear end 4 of the tool body 2, than a second axial position 17 at which the foremost portions, in the form of a part of their active cutting edge 13, of all of the other cutting inserts 9b-e are positioned. In other words, the foremost portion of the first cutting insert 9a protrude beyond the foremost portions of the other cutting inserts 9b-e to define the axially foremost portion of the milling tool 1 when all cutting inserts 9a-e are mounted in the tool body 2, i.e. held in their fixed positions by their associated insert seats 8a-e.

The first insert seat 8a is configured to keep the axially foremost portion of the active cutting edge 13 of the first cutting insert 9a located at least 0.05 mm, preferably at least 0.06 mm, more preferred at least 0.07 mm, and even more preferred 0.07 mm more forwardly in the longitudinal direction of the tool body 2, as seen from the rear 4 towards the front 3 end thereof, than the axially foremost portions of the active cutting edges 13 of the other cutting inserts 9b-e when the cutting inserts 9a-e are mounted in the tool body 2, to ensure that the axially foremost portion of the active cutting edge 13 of the first cutting insert 9a in any case project at least 0.01 mm, preferably at least 0.02 mm and more preferred at least 0.03 mm, respectively, past the axially foremost portions of the active cutting edges 13 of the other cutting inserts 9b-e when the cutting inserts 9a-e are mounted in the tool body 2. More specifically, the smallest difference between the axial position of the axially foremost portion of the active cutting edge 13 of the first cutting insert 9a and the axial position of the axially foremost portions of the active cutting edges 13 of the other cutting inserts 9b-e aimed for, and also preferred to actually reach, is chosen so as to in any case ensure that manufacturing tolerances of one of the at least three insert seats in the tool body and the associated one of the at least three cutting inserts may together never fully neutralize the axial forward projection of the axially foremost portion of the active cutting edge 13 of the first cutting insert 9a beyond the axially foremost portions of the active cutting edges 13 of the other cutting inserts 9b-e.

These lengths are favorable in order to provide the milling tool 1 with the vibration damping effect desired. In any case the first cutting insert 9a should protrude at least 0.05 mm more axially forwardly than the other cutting inserts 9b-e, or at least a majority thereof, and not more than 0.1 mm more forwardly, as above that number the wear on the first cutting insert 9a would drastically increase causing the beneficial effects of the invention to diminish.

This axially forward positioning of the first cutting insert 9a by the first insert seat 8a is realized by the first insert seat 8a being arranged more forwardly in the longitudinal direction of the tool body 2, as seen from the rear 4 towards the front 3 end thereof, than at least a majority, in this embodiment all, of the other 8b-e insert seats.

Each of the insert seats 8a-e comprising an axial support surface 18 configured to co-operate with an abutment surface 19 on a rear side of the associated one of the cutting inserts 9a-e when mounted in the insert seat 8a-e. The rear side of the cutting insert is in this context defined as the side facing away from the front end 3 of the tool body 2 towards the rear end 4 thereof when the cutting insert 9a-e is in said mounted position. The rear side of the cutting insert is thus the side facing into the insert seat in which the insert is mounted towards a bottom of the seat when the insert is mounted in an insert seat. This means that if the insert 9a-e is released and indexed so as to have its other cutting edge 13 as the active cutting edge, i.e. released, rotated 180 degrees and again mounted in the fixed position, the side of the insert which was facing forwardly in the axial direction will then become the rear side after rotation of the insert. The rear side is accordingly the side which is opposite the side provided with the currently active cutting edge.

The axial support surface 18 give the associated one of said cutting inserts axial support and a fixed axial position by defining a rear stop in the axial direction of the tool body 2 for the associated one of the cutting inserts 9a-e, that is the insert mounted in that insert seat, and thereby an axial position 16, 17 for the axially foremost portion of the active cutting edge 13 of that cutting insert when this is mounted in the tool body. The axial support surface 18 thus defining a rear stop for the first cutting insert 9a in the first insert seat 8a is arranged more forwardly in the longitudinal direction of the tool body 2, as seen from the rear 4 towards the front 3 end thereof, than the axial support surfaces 18 of at least a majority, in this embodiment all, of the other insert seats 8b-e and is thereby configured to hold the first cutting insert 9a in said fixed position with its axially foremost portion of the active cutting edge 13 located so as to define an axially foremost portion of the milling tool 1 and located more forwardly in the longitudinal direction of the tool body 2, as seen from the rear 4 towards the front 3 end thereof, than the axially foremost portions of the active cutting edges 13 of the other cutting inserts 9b-e when all of the cutting inserts 9a-e are mounted in the tool body 2. In addition to the axial support surface 18 all other features of the first insert seat 8a, such as the threaded hole 10 and various other support surfaces, are also located more axially forwardly than the corresponding features of the other insert seats 8b-e, i.e. the first insert seat 8a is identical or at least substantially identical in its geometry to the other insert seats 8b-e, but arranged more axially forwardly in the tool body 2.

It should be mentioned that even though only one 9a of the cutting inserts is more axially forwardly positioned with respect to the other inserts 9b-e in the embodiments shown it is also possible to have more than one such axially forwardly protruding insert, such as two or more inserts held with their axially foremost portions at said first axial position 16 when mounted in the tool body 2 and in such a case two or more insert seats are arranged more forwardly in the longitudinal direction of the tool body 2, as seen from the rear 4 towards the front 3 end thereof, than at least a majority of the other insert seats. However, the number of such axially forwardly protruding inserts should in any case be smaller than the number of other inserts, i.e., inserts which do not have their foremost portions defining a foremost axial position of the milling tool 1. The fewer of the total number of inserts that define the foremost axial position of the milling tool the better vibration damping effect is obtained. In a preferred embodiment (not shown) a maximum of two inserts are arranged with their axially foremost portions located more forwardly in the axial direction than the axially foremost portions of the other inserts. Such a milling tool would have to have at least five cutting inserts 9a-e as the axially forwardly protruding inserts have to be a minority of the total number of inserts. However, mostly preferred only one 9a of the cutting inserts has its axially foremost portion located more forwardly in the axial direction than the axially foremost portions of all of the other 9b-e cutting inserts, as is the case in the embodiments shown in the drawings.

In the embodiments shown aside from the first cutting insert 9a all of the other cutting inserts 9b-e are arranged so as to have the axially foremost portion of the active cutting edge 13 at the same axial position 17, as seen in the longitudinal direction of the tool body 2, when the at least three cutting inserts are mounted in the tool body. This is clear from Fig. 4 and 8. Although this is a preferred embodiment it could also be possible to have the other cutting inserts 9b-e located at mutually different axial positions along the tool body, such as having one or a few cutting inserts located axially more rearwardly in the front end 3 of the tool body 2 than some of the others.

The insert seats 8a-e are furthermore distributed in the circumferential direction of the tool body 2 in such a way that the angular distance 14a between the active cutting edge 13 of the first cutting insert 9a and the active cutting edge of the insert 9e immediately in front of the first cutting insert as seen in an intended direction of rotation R of the tool body, is smaller than the angular distance 14b-e between the active cutting edges of any other pair of consecutive cutting inserts 9a-e when the cutting inserts are mounted in the tool body 2 (see Fig. 3 and especially Fig. 7). The first cutting insert 9a would due to this configuration of the inserts 9a-e in the tool body 2 be exposed to the smallest cutting forces during a cutting operation of all cutting inserts if all cutting inserts would be located at the exact same axial position. It is this positioning of the first cutting insert 9a which results in the extra cutting forces applied to it due to its axially forward position being balanced out or reduced. In other words, the inventors have found a way to use the first cutting insert 9a as a vibration damper while protecting it from excessive wear thereby maintaining a favorable service life of this cutting insert and the milling tool 1.

The inventors have further found out that there are certain relations between the angular distances 14a-e between the active cutting edges of the pairs of consecutive cutting inserts that provide an optimized inventive effect, especially in terms of favorable vibration damping effect and low wear on the first cutting insert 9a.

More specifically, for insert seats 8a-e and cutting inserts 9a-e that are in each case n in number, i.e. n insert seats and n cutting inserts provided in the tool body 2, wherein n is an integer between 3 and 12, it is favorable that the n insert seats are distributed in the circumferential direction of the tool body 2 in such a way that the difference between the angular distance 14a between the active cutting edge of the first cutting insert 9a and the active cutting edge of the insert 9e immediately in front of the first cutting insert as seen in an intended direction of rotation R of the tool body 2, and the angular distance between the active cutting edges of a pair of consecutive cutting inserts that has a largest angular distance between its active cutting edges of all pairs of consecutive cutting inserts is at least $\frac{20}{n} + x$ degrees, wherein x is 0 when $7 \leq n \leq 10$ and x is 0.5 when $5 \leq n \leq 6$ or $11 \leq n \leq 12$ and x is 2 when $3 \leq n \leq 4$, when the n cutting inserts are mounted in the tool body 2.

This means that the difference between the smallest and the largest angular distance between the active cutting edges of a pair of consecutive cutting inserts mounted in the tool body 2 should be at least 8.7 degrees for 3 cutting inserts, at least 7 degrees for 4 cutting inserts, at least 4.5 degrees for 5 cutting inserts, at least 3.8 degrees for 6 cutting inserts, at least 2.9 degrees for 7 cutting inserts, at least 2.5 degrees for 8 cutting inserts, at least 2.2 degrees for 9 cutting inserts, at least 2 degrees for 10 cutting inserts, at least 2.3 degrees for 11 cutting inserts and at least 2.2 degrees for 12 cutting inserts arranged in succession in the front end 3 of the tool body 2 of the milling tool 1. Consequently, the difference between said smallest and largest angular distance 14a-e should be at least 4.5 degrees in the milling tool 1 shown in Figs 1-4, with five cutting inserts 9a-e.

Moreover, it is favorable that the n insert seats are distributed in the circumferential direction of the tool body 2 in such a way that the difference between the angular distance 14a between the active cutting edge of the first cutting insert 9a and the active cutting edge of the insert 9e immediately in front of the first cutting insert 9a as seen in an intended direction of rotation R of the tool body 2, and the angular distance between the active cutting edges of a pair of consecutive cutting inserts that has a second smallest angular distance between its active cutting edges of all pairs of consecutive cutting inserts of the n cutting inserts is at least $\frac{5}{n} + y$ degrees, wherein y is 0.2 when $7 \leq n \leq 12$ and y is 0.5 when $5 \leq n \leq 6$ and y is 1 when $3 \leq n \leq 4$, when the n cutting inserts are mounted in the tool body 2.

This means that the difference between the smallest and the second smallest angular distance between the active cutting edges of a pair of consecutive cutting inserts mounted in the tool body 2 should be at least 2.7 degrees for 3 cutting inserts, at least 1.25 degrees for 4 cutting inserts, at least 1.5 degrees for 5 cutting inserts, at least 1.3 degrees for 6 cutting inserts, at least 0.9 degrees for 7 cutting inserts, at least 0.8 degrees for 8 cutting inserts, at least 0.8 degrees for 9 cutting inserts, at least 0.7 degrees for 10 cutting inserts, at least 0.7 degrees for 11 cutting inserts and at least 0.6 degrees for 12 cutting inserts arranged in succession in the front end 3 of the tool body 2 of the milling tool 1. Consequently, the difference between said smallest and second smallest angular distance 14a-e should be at least 1.5 degrees in the milling tool 1 shown in Figs 1-4, with five cutting inserts 9a-e.

Furthermore, the insert seats 8a-e should preferably be distributed in the circumferential direction of the tool body 2 in such a way that the angular distance 14a-e between the active cutting edges 13 of each pair of consecutive cutting inserts 9a-e is different than the angular distance between the active cutting edges of any other pair of consecutive cutting edges when the cutting inserts are mounted in the tool body 2. This configuration further supports the interference of the harmonic vibrations which occur between the workpiece and milling tool 1.

The angular distances 14a-e between the active cutting edges 13 of the pairs of consecutive cutting inserts 9a-e in a milling tool 1 according to the first embodiment could thus be 69, 71, 72, 73 and 75 degrees, as one example.

The inventive features described above have essentially the same function in the milling tool 101 shown in Figs 5-8. As already mentioned, this milling tool is intended for face milling. It is provided with eight insert seats 108a-h and eight cutting inserts 109a-h, of which a first 109a is held in the fixed position in the first insert seat 108a so as to have its axially foremost portion more axially forwardly in the longitudinal direction of the tool body 102 than at least a majority, however also in this embodiment all, of the axially foremost portions of the other cutting inserts 109b-h when the cutting inserts 109a-h are mounted in the tool body 102. The inserts of the face milling tool 101 have a different geometry than those of the square shoulder milling tool 1, with a total of fourteen usable cutting edges instead of two. The number of cutting inserts 109a-h on this milling tool 101 imply that the difference between said smallest and largest angular distance 114a-h should be at least 2.5 degrees. At the same time, the difference between said smallest and second smallest angular distance 114a-h should be at least 0.8 degrees.

The angular distances 114a-h between the active cutting edges 113 of the pairs of consecutive cutting inserts 109a-h in a milling tool 101 according to the second embodiment could thus be 42, 43, 43.5, 45, 45.5, 46, 47 and 48 degrees, as one example.

The invention is of course not in any way restricted to the embodiments described above. On the contrary, many possibilities to modifications thereof will be apparent to a person with ordinary skill in the art without departing from the basic idea of the invention such as defined in the appended claims.

The number of said insert seats and associated cutting inserts on a milling tool according to the invention may be between three and twelve. It should however be noted that such a milling tool could have more than twelve cutting inserts in total, for instance in the case of a deep shoulder milling tool, as long as it has between three and twelve such insert seats and cutting inserts as defined above.

The declaration that the insert seats should be "unevenly distributed" to provide "irregular angular distances" between consecutive cutting inserts should be interpreted as at least not all said distances are the same. It should however be interpreted as to cover the case where only one of the distances are not the same as the others.

The axially foremost portion shall, both regarding this portion of a milling tool and of an individual cutting insert, be understood as a portion defining a very front of the tool or insert, respectively, in the longitudinal direction as seen from the rear towards the front end of the tool body. However, this position may be shared with parts of other components or other portions, i.e. two inserts may each have a portion defining the axially foremost portion of the milling tool and two portions of one and the same cutting insert may be located at exactly the same axial position and both define an axially foremost portion of the insert, to mention a few examples.

## Claims

1. A milling tool (1, 101) comprising:

   - a tool body (2, 102) having a front end (3, 103) and an opposite rear end (4, 104), the rear end (4, 104) being configured for attachment to a machine, such as a CNC-machine, wherein a central longitudinal axis (7, 107) of the tool body (2, 102) extends between the rear end (4,104) and the front end (3, 103) of the tool body (2, 102),
   - at least three replaceable cutting inserts (9a-e, 109a-h), each cutting insert (9a-e, 109a-h) having at least one cutting edge (13, 113),
   - at least three insert seats (8a-e, 108a-h) arranged in succession one after the other in the front end (3, 103) of the tool body (2, 102) and distributed in the circumferential direction of the tool body (2, 102), each insert seat (8a-e, 108a-h) of the at least three insert seats (8a-e, 108a-h) being configured to accommodate a respective one of said cutting inserts (9a-e, 109a-h),

   wherein each cutting insert (9a-e, 109a-h) is configured to be detachably mounted in a respective one of said insert seats (8a-e, 108a-h) in a fixed position with respect to the tool body (2, 102) as seen in an axial direction thereof, wherein each cutting insert (9a-e, 109a-h) has one of said at least one cutting edges (13, 113) as an active cutting edge when mounted in the tool body (2, 102),
   wherein said at least three insert seats (8a-e, 108a-h) are unevenly distributed in the circumferential direction of the tool body (2, 102) so as to provide the milling tool (1, 101) with irregular angular distances (14a-e, 114a-h) between the active cutting edges (13, 113) of each pair of consecutive cutting inserts (9a-e, 109a-h) of the at least three cutting inserts (9a-e, 109a-h) when these are mounted in the tool body (2, 102), _**characterized**_ in _**that**_ a first (8a, 108a) of said at least three insert seats (8a-e, 108a-h) is configured to accommodate a first (9a, 109a) of said at least three cutting inserts (9a-e, 109a-h) to hold it in said fixed position and to keep an axially foremost portion of the active cutting edge (13, 113) of said first cutting insert (9a, 109a) located so as to define an axially foremost portion of the milling tool (1, 101) and located more forwardly in the longitudinal direction of the tool body (2, 102), as seen from the rear (4, 104) towards the front (3, 103) end thereof, than the axially foremost portions of the active cutting edges (13, 113) of at least a majority of the other cutting inserts (9b-e, 109b-h) of the at least three cutting inserts (9a-e, 109a-h) when the at least three cutting inserts (9a-e, 109a-h) are mounted in the tool body (2, 102), and
   _**that**_ the at least three insert seats (8a-e, 108a-h) are furthermore distributed in the circumferential direction of the tool body (2, 102) in such a way that the angular distance (14a, 114a) between the active cutting edge (13, 113) of the first cutting insert (9a, 109a) and the active cutting edge (13, 113) of the insert (9e, 109h) immediately in front of the first cutting insert (9a, 109a) as seen in an intended direction of rotation (R) of the tool body (2, 102), is smaller than the angular distance (14b-e, 114b-h) between the active cutting edges (13, 113) of any other pair of consecutive cutting inserts (9a-e, 109a-h) of the at least three cutting inserts (9a-e, 109a-h) when the at least three cutting inserts (9a-e, 109a-h) are mounted in the tool body (2, 102).

2. A milling tool (1, 101) according to claim 1, _**characterized**_ in _**that**_ each of said at least three insert seats (8a-e, 108ah) comprises an axial support surface (18, 118) configured to co-operate with an abutment surface (19, 119) on a rear side of the associated one of the at least three cutting inserts (9a-e, 109a-h) when mounted in the insert seat (8a-e, 108a-h), the rear side of the cutting insert (9a-e, 109a-h) defined as the side facing away from the front end (3, 103) of the tool body (2, 102) towards the rear end (4, 104) thereof when the cutting insert (9a-e, 109a-h) is in said mounted position, so as to give the associated one of said cutting inserts (9a-e, 109a-h) axial support and a fixed axial position and define a rear stop in the axial direction of the tool body (2, 102) for the associated one of said cutting inserts (9a-e, 109a-h) and thereby an axial position for the axially foremost portion of the active cutting edge (13, 113) of that cutting insert (9a-e, 109a-h) when this is mounted in the tool body (2, 102), and
   that said axial support surface (18, 118) of the first insert seat (8a, 108a) is arranged more forwardly in the longitudinal direction of the tool body (2, 102), as seen from the rear (4, 104) towards the front (3, 103) end thereof, than the axial support surfaces (18, 118) of at least a majority of the other (8b-e, 108b-h) of said at least three insert seats (8a-e, 108a-h).

3. A milling tool (1, 101) according to claim 1 or 2, ***characterized* in that** the first insert seat (8a, 108a) is arranged more forwardly in the longitudinal direction of the tool body (2, 102), as seen from the rear (4, 104) towards the front (3, 103) end thereof, than at least a majority of the other (8b-e, 108b-h) of said at least three insert seats (8a-e, 108a-h), and thereby configured to hold said first (9a, 109a) of said at least three cutting inserts (9a-e, 109a-h) in said fixed position with its axially foremost portion of the active cutting edge (13, 113) located so as to define an axially foremost portion of the milling tool (1, 101) and located more forwardly in the longitudinal direction of the tool body (2, 102), as seen from the rear (4, 104) towards the front (3, 103) end thereof, than the axially foremost portions of the active cutting edges (13, 113) of said at least a majority of the other (9b-e, 109b-h) cutting inserts of the at least three cutting inserts (9a-e, 109a-h) when the at least three cutting inserts (9a-e, 109a-h) are mounted in the tool body (2, 102).

4. A milling tool (1, 101) according to any of the preceding claims, ***characterized* in that** for any number of said at least three cutting inserts (9a-e, 109a-h) comprised in the milling tool (1, 101) not more than one of said other cutting inserts (9b-e, 109b-h) of the at least three cutting inserts (9a-e, 109a-h) has its axially foremost portion of the active cutting edge (13, 113) at the same axial position, in the longitudinal direction of the tool body (2, 102), as the axially foremost portion of the first cutting insert (9a, 109a) when the at least three cutting inserts (9a-e, 109a-h) are mounted in the tool body (2, 102).

5. A milling tool (1, 101) according to any of the claims 1-3, ***characterized* in that** the first insert seat (8a, 108a) is configured to keep the axially foremost portion of the active cutting edge (13, 113) of said first cutting insert (9a, 109a) located more forwardly in the longitudinal direction of the tool body (2, 102), as seen from the rear (4, 104) towards the front (3, 103) end thereof, than the axially foremost portions of the active cutting edges (13, 113) of each of the other (9b-e, 109b-h) cutting inserts of the at least three cutting inserts (9a-e, 109a-h) when the at least three cutting inserts (9a-e, 109a-h) are mounted in the tool body (2, 102).

6. A milling tool (1, 101) according to claim 5, ***characterized* in that** the at least three insert seats (8a-e, 108a-h) and the at least three cutting inserts (9a-e, 109a-h) are arranged such that aside from the first cutting insert (9a, 109a) all of the cutting inserts of the at least three cutting inserts (9a-e, 109a-h) have the axially foremost portion of the active cutting edge (13, 113) at the same axial position, as seen in the longitudinal direction of the tool body (2, 102), when the at least three cutting inserts (9a-e, 109a-h) are mounted in the tool body (2, 102).

7. A milling tool (1, 101) according to claim 6, ***characterized* in that** the first insert seat (8a, 108a) is configured to keep the axially foremost portion of the active cutting edge (13, 113) of said first cutting insert (9a, 109a) located at least 0.05 mm, preferably at least 0.06 mm, more preferred at least 0.07 mm, and even more preferred 0.07 mm more forwardly in the longitudinal direction of the tool body (2, 102), as seen from the rear (4, 104) towards the front (3, 103) end thereof, than the axially foremost portions of the active cutting edges (13, 113) of the other (9b-e, 109b-h) cutting inserts of the at least three cutting inserts (9a-e, 109a-h) when the at least three cutting inserts (9a-e, 109ah) are mounted in the tool body (2, 102).

8. A milling tool (1, 101) according to any of the preceding claims ***characterized* in that** the at least one cutting edge (13, 113) of each of the at least three cutting inserts (9a-e, 109a-h) has a surface wiping part (20), and that said surface wiping part (20) of each of the at least three cutting inserts (9a-e, 109a-h) each have the same length.

9. A milling tool (1, 101) according to claim 8, ***characterized* in that** the at least three cutting inserts (9a-e, 109a-h) are geometrically identical or at least substantially geometrically identical.

10. A milling tool (1, 101) according to any of the preceding claims ***characterized* in that** the at least three insert seats (8a-e, 108a-h) are n in number and that the at least three cutting inserts (9a-e, 109a-h) are n in number and equal in number to the number of insert seats (8a-e, 108a-h), and that n is an integer from 3 to 12.

11. A milling tool (1, 101) according to claim 10, ***characterized* in that** the n insert seats (8a-e, 108a-h) are distributed in the circumferential direction of the tool body (2, 102) in such a way that the difference between the angular distance (14a, 114a) between the active cutting edge (13, 113) of the first cutting insert (9a, 109a) and the active cutting edge (13, 113) of the insert (9e, 109h) immediately in front of the first cutting insert (9a, 109a) as seen in an intended direction of rotation (R) of the tool body (2, 102), and the angular distance (14b-e, 114b-h) between the active cutting edges (13, 113) of a pair of consecutive cutting inserts (9a-e, 109a-h) of the n cutting inserts (9a-e, 109a-h) that has a largest angular distance between its active cutting edges (13, 113) of all pairs of consecutive cutting inserts (9a-e, 109a-h) of the n cutting inserts (9a-e, 109a-h) is at least

$$\frac{20}{n} + x \text{ degrees,}$$

wherein x is 0 when $7 \le n \le 10$ and x is 0.5 when $5 \le n \le 6$ or $11 \le n \le 12$ and x is 2 when $3 \le n \le 4$, when the n cutting inserts (9a-e, 109a-h) are mounted in the tool body (2, 102).

12. A milling tool (1, 101) according to claim 10 or 11, *characterized* in that the n insert seats (8a-e, 108a-h) are distributed in the circumferential direction of the tool body (2, 102) in such a way that the difference between the angular distance (14a, 114a) between the active cutting edge (13, 113) of the first cutting insert (9a, 109a) and the active cutting edge (13, 113) of the insert (9e, 109h) immediately in front of the first cutting insert (9a, 109a) as seen in an intended direction of rotation (R) of the tool body (2, 102), and the angular distance (14b-e, 114b-h) between the active cutting edges (13, 113) of a pair of consecutive cutting inserts (9a-e, 109a-h) of the n cutting inserts (9a-e, 109a-h) that has the second smallest angular distance between its active cutting edges (13, 113) of all pairs of consecutive cutting inserts (9a-e, 109a-h) of the n cutting inserts (9a-e,

$$\frac{5}{n} + y$$

109a-h) is at least degrees, wherein y is 0.2 when $7 \le n \le 12$ and y is 0.5 when $5 \le n \le 6$ and y is 1 when $3 \le n \le 4$, when the n cutting inserts (9a-e, 109a-h) are mounted in the tool body (2, 102).

13. A milling tool (1, 101) according to any of the claims 10-12 *characterized* in that the n insert seats (8a-e, 108a-h) are distributed in the circumferential direction of the tool body (2, 102) in such a way that the angular distance (14a-e, 114a-h) between the active cutting edges (13, 113) of each pair of consecutive cutting inserts (9a-e, 109a-h) of the n cutting inserts (9a-e, 109a-h) is different than the angular distance (14a-e, 114a-h) between the active cutting edges (13, 113) of any other pair of consecutive cutting edges (13, 113) of the n cutting inserts (9a-e, 109a-h) when the n cutting inserts (9a-e, 109a-h) are mounted in the tool body (2, 102).

14. A tool body (2, 102) intended to be provided with at least three geometrically identical or at least substantially geometrically identical cutting inserts (9a-e, 109a-h), each having at least one cutting edge (13, 113), so as to together form a milling tool (1, 101), the tool body (2, 102) having:

a front end (3, 103) and an opposite rear end (4, 104), the rear end (4, 104) being configured for attachment to a machine, such as a CNC-machine, wherein a central longitudinal axis (7, 107) of the tool body (2, 102) extends between the rear end (4, 104) and the front end (3, 103) of the tool body (2, 102), and
at least three insert seats (8a-e, 108a-h) arranged in succession one after the other in the front end (3, 103) of the tool body (2, 102) and distributed in the circumferential direction of the tool body (2, 102), each insert seat (8a-e, 108a-h) of the at least three insert seats (8a-e, 108a-h) being configured to accommodate a respective one of said cutting inserts (9a-e, 109a-h) and to hold it in a detachably mounted position in which the cutting insert (9a-e, 109a-h) is fixed with respect to the tool body (2, 102) as seen in an axial direction thereof and has one of said at least one cutting edges (13, 113) as an active cutting edge,
wherein said at least three insert seats (8a-e, 108a-h) are unevenly distributed in the circumferential direction of the tool body (2, 102) so as to provide the milling tool (1, 101) with irregular angular distances (14a-e, 114a-h) between the active cutting edges (13, 113) of each pair of consecutive cutting inserts (9a-e, 109a-h) of the at least three cutting inserts (9a-e, 109a-h) when these are mounted in the tool body (2, 102), *characterized* in
**that** a first (8a, 108a) of said at least three insert seats (8a-e, 108a-h) is configured to accommodate a first (9a, 109a) of said at least three cutting inserts (9a-e, 109a-h) to hold it in said mounted position and to keep an axially foremost portion of the active cutting edge (13, 113) of said first cutting insert (9a, 109a) located so as to define an axially foremost portion of the milling tool (1, 101) and located more forwardly in the longitudinal direction of the tool body (2, 102), as seen from the rear (4, 104) towards the front (3, 103) end thereof, than the axially foremost portions of the active cutting edges (13, 113) of at least a majority of the other (9b-e, 109b-h) cutting inserts of the at least three cutting inserts (9a-e, 109a-h) when the at least three cutting inserts (9a-e, 109a-h) are mounted in the tool body (2, 102),
**that** each of said at least three insert seats (8a-e, 108a-h) comprises an axial support surface (18, 118) configured to co-operate with an abutment surface (19, 119) on a rear side of the associated one of the at least three cutting inserts (9a-e, 109a-h) when mounted in the insert seat (8a-e, 108ah), the rear side of the cutting insert (9a-e, 109a-h) defined as the side facing away from the front end (3, 103) of the tool body (2, 102) towards the rear end (4, 104) thereof when the cutting insert (9a-e, 109a-h) is in said mounted position, so as to give the associated one of said cutting inserts (9a-e, 109a-h) axial support and a fixed axial position and define a rear stop in the axial direction of the tool body (2, 102) for the associated one of said cutting inserts (9a-e, 109a-h) and thereby an axial position for the axially foremost portion of the active cutting edge (13, 113) of that cutting insert (9a-e, 109a-h) when this is mounted in the tool body (2, 102),

that said axial support surface (18, 118) of the first insert seat (8a, 108a) is arranged more forwardly in the longitudinal direction of the tool body (2, 102), as seen from the rear (4, 104) towards the front (3, 103) end thereof, than the axial support surfaces (18, 118) of at least a majority of the other (8b-e, 108b-h) of said at least three insert seats, and

that the at least three insert seats (8a-e, 108a-h) are furthermore distributed in the circumferential direction of the tool body (2, 102) in such a way that the angular distance (14a, 114a) between the active cutting edge (13, 113) of the first cutting insert (9a, 109a) and the active cutting edge (13, 113) of the insert (9e, 109h) immediately in front of the first cutting insert (9a, 109a) as seen in an intended direction of rotation (R) of the tool body (2, 102), is smaller than the angular distance (14b-e, 114b-h) between the active cutting edges (13, 113) of any other pair of consecutive cutting inserts (9a-e, 109a-h) of the at least three cutting inserts (9a-e, 109a-h) when the at least three cutting inserts (9a-e, 109a-h) are mounted in the tool body (2, 102).

15. A tool body (2, 102) according to claim 14, ***characterized*** **in that** the first insert seat (8a, 108a) is arranged more forwardly in the longitudinal direction of the tool body (2, 102), as seen from the rear (4, 104) towards the front (3, 103) end thereof, than at least a majority of the other (8b-e, 108b-h) of said at least three insert seats (8a-e, 108a-h), and thereby configured to hold said first (9a, 109a) of said at least three cutting inserts (9a-e, 109a-h) in said fixed position with its axially foremost portion of the active cutting edge (13, 113) located so as to define an axially foremost portion of the milling tool (1, 101) and located more forwardly in the longitudinal direction of the tool body (2, 102), as seen from the rear (4, 104) towards the front (3, 103) end thereof, than the axially foremost portions of the active cutting edges (13, 113) of said at least a majority of the other (9b-e, 109b-h) cutting inserts of the at least three cutting inserts (9a-e, 109a-h) when the at least three cutting inserts (9a-e, 109a-h) are mounted in the tool body (2, 102).

16. A tool body (2, 102) according to claim 15, ***characterized*** **in that** aside from the first insert seat (8a, 108a) all of the insert seats (8b-e, 108b-h) of the at least three insert seats (8a-e, 108a-h) are arranged at the same axial position in the tool body (2, 102), as seen in the longitudinal direction of the tool body (2, 102), and that the first insert seat (8a, 108a) is arranged at least 0.05 mm, preferably at least 0.06 mm, more preferred at least 0.07 mm, and even more preferred 0.07 mm more forwardly in the longitudinal direction of the tool body (2, 102), as seen from the rear (4, 104) towards the front (3, 103) end thereof, than the other (8b-e, 108b-h) insert seats of the at least three insert seats (8a-e, 108a-h).

Fig 1

Fig 2

*Fig 3*

*Fig 4*

*Fig 5*

*Fig 6*

Fig 7

Fig 8

Europäisches
Patentamt

European
Patent Office

Office européen
des brevets

# EUROPEAN SEARCH REPORT

Application Number

EP 23 18 2645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/076535 A2 (ENDRES WILLIAM J [US]) 22 April 2021 (2021-04-22) * figures * * paragraph [0056]; figures 9a,9b,10a,10b * * the whole document * | 1-16 | INV. B23C5/06 |
| A | KR 2010 0032180 A (LIM JONG WON [KR]) 25 March 2010 (2010-03-25) * figures * * paragraph [0041] * * paragraph [0050] * * paragraph [0062] – paragraph [0065] * | 1 | |
| A | US 3 163 919 A (WILLIAM TURNER) 5 January 1965 (1965-01-05) * figures * | 1,13 | |
| A | DE 10 2021 119229 A1 (AUDI AG [DE]; AUDI HUNGARIA ZRT [HU]) 13 October 2022 (2022-10-13) * figures * | 1,12 | TECHNICAL FIELDS SEARCHED (IPC) B23C |
| T | DE 299 18 924 U1 (JANSEN HERFELD ROETTGER FA [DE]) 19 April 2001 (2001-04-19) * page 1; figures * | | |

The present search report has been drawn up for all claims

| Place of search | Date of completion of the search | Examiner |
|---|---|---|
| The Hague | 23 November 2023 | Rabolini, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## EP 4 484 038 A1

### ANNEX TO THE EUROPEAN SEARCH REPORT
### ON EUROPEAN PATENT APPLICATION NO.

EP 23 18 2645

23-11-2023

| Patent document cited in search report | Publication date | Patent family member(s) | Publication date |
|---|---|---|---|
| WO 2021076535 A2 | 22-04-2021 | NONE | |
| KR 20100032180 A | 25-03-2010 | NONE | |
| US 3163919 A | 05-01-1965 | GB 1003175 A<br>US 3163919 A | 02-09-1965<br>05-01-1965 |
| DE 102021119229 A1 | 13-10-2022 | DE 102021119229 A1<br>WO 2023006549 A1 | 13-10-2022<br>02-02-2023 |
| DE 29918924 U1 | 19-04-2001 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220055125 A1
- EP 3321017 A1